# EUROPÄISCHE PATENTSCHRIFT

(11) **EP 1 705 411 B1**
(45) Veröffentlichungstag und Bekanntmachung des Hinweises auf die Patenterteilung: **17.06.2009**
(21) Anmeldenummer: 06111633.1
(22) Anmeldetag: 23.03.2006
(51) Int. Cl.: F16K 11/07, F16K 31/122, F16K 3/24, F15B 13/04

(54) **Schnellschaltendes pneumatisches Ventil**
Fast switching pneumatic valve
Soupape pneumatique de commutation rapide

(30) Priorität: 24.03.2005 DE 102005013611
(43) Veröffentlichungstag der Anmeldung: 27.09.2006
(73) Patentinhaber: Bosch Rexroth AG, 70184 Stuttgart (DE)
(72) Erfinder: Kulmann, Erwin, 71706, Markgröningen (DE)
(74) Vertreter: Kietzmann, Lutz

(56) Entgegenhaltungen:
- EP-A- 0 845 602
- DE-A1- 3 322 912
- DE-A1- 10 048 600
- US-A- 3 283 784
- US-A- 3 559 686
- US-A- 3 902 526
- US-A- 4 067 357
- US-B1- 6 220 288

## Beschreibung

Die Erfindung betrifft schnellschaltendes pneumatisches Ventil mit den Merkmalen des Oberbegriffs des Anspruchs 1.

Pneumatische Ventile dieser Art sind im Stand der Technik vielfach bekannt und enthalten zwei auf einen als Ventilschieber ausgebildeten Schaltelement einwirkende endseitige Betätigungskolben, die zur Erzielung entweder einer bistabilen oder einer monostabilen Ventilfunktion beaufschlagbar sind.

Ein solches Ventil ist aus der DE 195 09 578 A1 bekannt, und enthält zwei Betätigungskolben, die im Durchmesser weitestgehend dem Schieberdurchmesser entsprechen. Bei dieser Anordnung sind insgesamt sechs Dichtungen vorgesehen, die im gleitreibungsverursachend mitbewegt werden müssen, sobald der Ventilschieber bewegt wird,

Aus der US 3,283,784 geht ein Ventil hervor, welches sich eines schieberartigen Schaltelements bedient und über Steuerdruckbeaufschlagung bewegbar ist. Das Schaltelement bildet teilweise gemeinsam mit Steuerkanten seitens des Ventilgehäuses ein Schieberventil, wobei auch seitens des Ventilgehäuses zentral zwei gegenüberliegende Ventilsitze ausgebildet sind welche ebenfalls vom Schaltelement bestätigt werden, in dem hieran ein korrespondierendes, zentrales Verschlusselement angebracht ist. Allerdings sind sämtliche dynamischen Dichtungen gehäuseseitig vorgesehen, was zu einem erhöhten Montageaufwand führt, denn die ringförmigen Dichtungen werden abwechselnd mit distanzbildenden Hülsen in eine Schieberbohrung des Ventilgehäuses eingebracht. Eine Ausnahme hiervon bilden lediglich endseitig am Schaltelement angebrachte Dichtringe zur Steuerdruckbeaufschlagung. Diese Mischlösung erscheint insgesamt recht aufwendig in der Fertigung sowie Montage.

Bei einem kleinbauenden Ventil verkleinern sich natürlich auch die als Steuerdruck aufbringbaren pneumatischen Stellkräfte, weil sich die Kolbenflächen der Betätigungskolben zwangsläufig verkleinern. Dies wiederum würde eine Erhöhung des Stelldruckes bedeuten, was jedoch zur Folge hätte, dass die Dichtringe stärker abdichten müssten, wodurch sich die resultierenden Reibungskräfte wieder erhöhen würde.

Außerdem entwickelt sich ein technischer Trend zu immer kompakteren und kleinbauenden Ventilen. Eine Vielzahl von Dichtungen erhöht dabei das Reibungsproblem. Hieraus resultiert ein unlösbarer funktionaler Widerspruch bei der Verkleinerung bisheriger Ventilbauformen in Schieberbauweise.

Die Größe der Reibung geht außerdem auch in die Zeit ein, die zum Schalten, d.h. zum Bewegen des Ventilschieber von einer Ausgangsposition in eine gewünschte Endposition benötigt wird.

Der Erfindung liegt somit die Aufgabe zugrunde, eine schnellschaltendes pneumatisches Ventil zu schaffen, dessen Schaltelement besonders leichtgängig ist, so dass das Ventil damit schneller wird, selbst dann, wenn es baulich stark verkleinert ist.

Die gestellte Aufgabe wird bei einem Ventil der gattungsgemäßen Art erfindungsgemäß durch die kennzeichnenden Merkmale des Patentanspruches 1 gelöst. Weitere vorteilhafte Ausgestaltungen der erfindungsgemäßen Entlüftungseinrichtung sind in den abhängigen Ansprüchen angegeben.

Somit entsteht zwischen den beiden Betätigungskolben ein zentrales Sitzventil. Hierdurch wird gegenüber der eingangs genannten bekannten Ventilbauform beim Anfahren des Ventils die Reibung stark herabgesetzt. Dies geschieht dadurch, weil im mittleren Bereich des Schaltelements keine gleitreibungsverursachende Dichtringe mehr relativ zum Ventilgehäuse verschoben werden müssen, weil dort erfindungsgemäß das Sitzventil implementiert ist.

Die Betätigungskolben sind mit zwei axial beabstandeten Dichtringen versehen, derart, dass hierüber Schaltfunktionen nach Art eines Schieberventils ausübbar sind. Dies bedeutet, dass die mit Steuerdruck beaufschlagbaren Betätigungskolben nicht nur die jeweilige Stellfunktion des Ventilschiebers ausüben, sondern, dass der je zweite, axial beabstandete Dichtring entlang des Betätigungsweges auch noch einen Druckmittelkanal, in diesem Fall einen Entlüftungskanal überstreicht. Damit kommt dem jeweiligen Betätigungskolben neben der hubbewirkten Funktion auch noch eine Schaltfunktion zu, die durch den zweiten axial beabstandeten Dichtungsring bewirkt wird.

In weiterer vorteilhafter Ausgestaltung ist vorgesehen, dass das zentrale Sitzventil entlang des Hubes des Ventilschiebers zwischen zwei Ventilsitzen betätigbar ist. Damit entfallen in diesem Bereich gleit- und haftreibend mitbewegte Dichtringe, wodurch das Ventil im Ganzen sehr viel leichtgängiger und damit aufgrund herabgesetzter bzw. eliminierter Haftreibungskräfte auch schneller bewegbar ist.

In weiterer vorteilhafter Ausgestaltung ist vorgesehen, dass die Steuerkanäle innerhalb des Ventilgehäuses durch hierin einlegbare entsprechend konturierte Hülsen gebildet sind. Dadurch lassen sich Ventilfunktionbaulich einfach montieren. Sie lassen sich sogar durch alleinigen Austausch gegen andere Hülsen in ihrer Funktion verschiedenartig festlegen.

In weiterer vorteilhafter Ausgestaltung ist vorgesehen, dass im jeweiligen Bereich der hubbezogenen Betätigungsstrecke der Betätigungskolben eine wechselseitige Entlüftung zweier Arbeitsleitungen durch Überstreichen des jeweils zur Entlüftung gerichteten Dichtringes des jeweiligen Betätigungskolbens an der entsprechenden Dichtkante erreicht wird.

Funktional heißt dies auch, dass wenn der Ventilschieber in einem der Endanschläge ist, bzw. einer der Betätigungskolben im Endanschlag ist, dann ist an diesem Betätigungskolben lediglich eine Ringdichtung noch in Haftwirkung. Die andere ragt in den offen Bereich des Entlüftungskanals, bevor dieser überstrichen wird. D.h. mit anderen Worten, dass sich in dieser Bauform nur drei Dichtungen bei der Umsteuerung im Haftschluss befinden. Beim Ventil aus dem eingangs zitierten Stand der Technik sind es jedoch sechs Dichtungen, deren Haftschluss bei der Umsteuerung überwunden werden muss.

Damit ist das erfindungsgemäße Ventil deutlich schneller. Bei der Ausgestaltung, dass die Dichtung des implementierten Sitzventils aus einer beidseitig wirksamen Flachdichtung besteht, wird eine reibschlussbewirkende Dichtung im zentralen Schaltelementbereich komplett vermieden.

Weiterhin ist vorteilhaft ausgestaltet, dass die Betätigungskolben in jeweils einer zugeordneten Führungshülse angeordnet sind, in der ebenfalls sowohl die Steuerkanal als auch die jeweilige Entlüftung der jeweiligen Arbeitsleitung integriert ist. Dies erleichtert die Montage und die bauliche Berücksichtigung der genannten Funktionen.

In weiterer vorteilhafter Ausgestaltung ist vorgesehen, dass zwischen den endseitigen Führungshülsen zwei zueinander benachbarte Sitzhülsen angeordnet sind, die zum einen jeweils einen Ventilsitz als auch eine Öffnung für die jeweilige Arbeitsleitung enthalten. Hierdurch kann das Sitzventil in die Mitte des Ventilgehäuses einfach eingebracht werden. Dabei sind die zwei Hülsen aneinander anzuordnen, wobei die eine Hülse den einen Ventilsitz und die andere Hülse den anderen Ventilsitz enthält. Zwischen den beiden Hülsen ist durch einen entsprechend implementierten Kanal der zentrale Speisedruckanschluss vorgesehen.

Das Schaltelement kann beidseitig mit einem Steuerdruck beaufschlagbar sein, um ein bistabiles 5/2-Wegeventil zu bilden. Alternativ hierzu ist es jedoch auch möglich, dass das Schaltelement einseitig mit einem Steuerdruck und auf der gegenüberliegenden Seite durch eine in einem Raum des Betätigungskolben angeordnete Druckfeder beaufschlagbar ist, um ein monostabiles 5/2-Wegeventil zu bilden.

Ein Ausführungsbeispiel der Erfindung ist in der schematischen Zeichnung dargestellt und wird nachfolgend näher beschrieben.

Das Ventil ist als kombiniertes Sitz-Schieberventil ausgestaltet. Das als Ventilschieber fungierende und im Ventilgehäuse A axial bewegbar angeordnete Schaltelement ist dabei einteilig ausgestaltet.

Das Schaltelement umfasst auch die beiden endseitig platzierten Betätigungskolben c und d. Beide Betätigungskolben c und d sind mit je zwei Kolbendichtungen b, e bzw. a, c versehen.

Im Bereich des zentralen Sitzventils ist das Schaltelement mit einer doppelwirkenden Flachdichtung z versehen, die abwechselnd aus zwei verschiedenen Ventilsitzen j, k, gebildet von zwei Sitzhülsen B und C dichtend auflegbar ist.

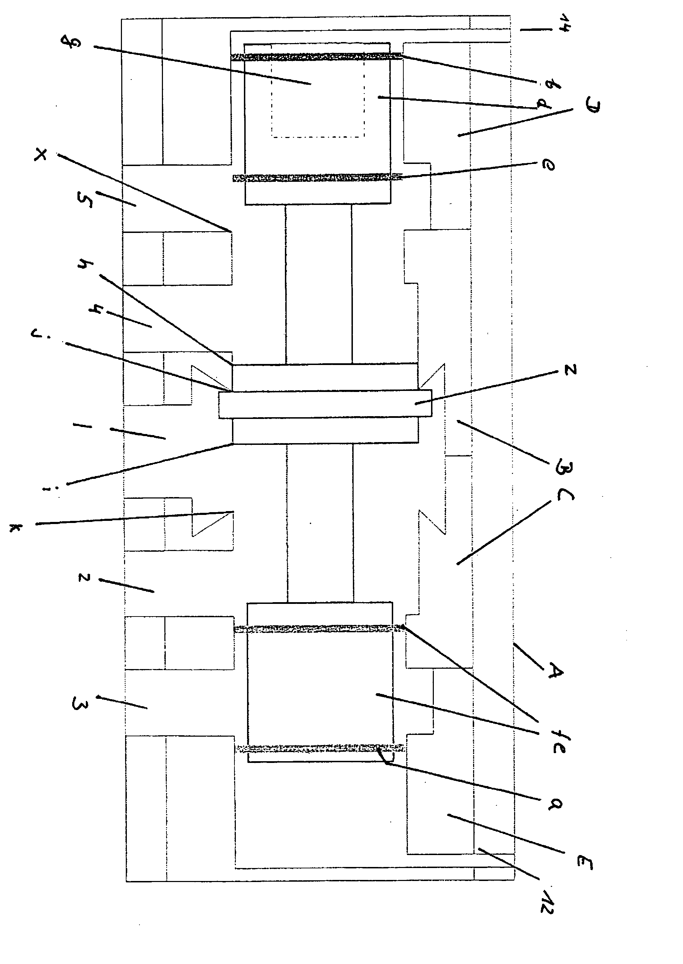

Die in der Abbildung gewählte Ventildarstellung zeigt ein bistabiles 5/2-Wegeventil. Hier kann durch entsprechende Umsteuerung von dem Steuerkanal 12 auf Steuerkanal 14 eine Umsteuerung, also eine Bewegung des Schaltelements von eine in die andere Richtung bewirkt werden, weil dann der Steuerkanal 14 belüftet und der Steuerkanal 12 entlüftet wird, et vice versa.

In einem Raum g eines der Betätigungskolben d ist alternativ auch eine - nicht weiter dargestellte - Druckfeder unterbringbar, um ein monostabiles 5/2-Wegeventil zu bilden.

Gemäß dieser Darstellung sind die beiden Kolbendichtungen a und b der Betätigungskolben c und d als Enddichtungen gegenüber dem Steuerdruck anzusehen. Neben dieser Funktion haben sie auch die Aufgabe einer Schaltelementführung im Ventilgehäuse A und bilden über die Kolbendichtungen e und f gleichzeitig auch das Entlüftungsventil nach Art eines Schieberventils.

Wird nun bei der darstellten Bauweise ein Steuerkanal 12 oder 14 mit Steuerdruck beaufschlagt und das Schaltelement bewegt sich daraufhin, sind beim Anfahren aus einer Endlage immer nur drei Kolbendichtungen - hier a, f, b - im Reibeingriff.

Da das mittlere Ventil erfindungsgemäß als Sitzventil ausgebildet ist, wird beim Anfahren lediglich die Flachdichtung z von einem der Ventilsitze j, k abgehoben und in Richtung des anderen Ventilsitzes k bzw. j bewegt. Dabei reibt die Flachdichtung aber nirgendwo.

Insgesamt wird damit bei gleicher Mehrfachventilfunktion nur die halbe Reibung erzeugt. Die Schaltzeit verkürzt sich und je nach konstruktiver Auslegung und es ist nur mit geringen Schaltdrücken zu rechnen. Insgesamt ist das erfindingsgemäße Ventil trotz hoher Schaltfunktionalität erheblich leichtgängiger und damit schneller.

Die Abdichtung am mittleren Ventilsitz k bzw. j erfolgt durch die Flächendifferenz von Ventilsitzdurchmesser und Kolbendichtung e oder f. Der Sitzdurchmesser muss größer sein als der Durchmesser des Schaltelements im Bezug auf die Kolbendichtung a, b. Die resultierende Kraft wirkt somit auf die Flachdichtung z.

Wird nun beispielsweise der Steuerkanal 14 belüftet, dann bewegt sich der Betätigungskolben d und die Kolbendichtung e über die Einführungssteuerkante x in den Ventilraum bevor die Steuerkante h des Ventilschiebers am Ventilsitz j öffnet. Damit ergibt sich eine positive Überdeckung. Die Kolbendichtung f öffnet, nachdem die Steuerkante i am Ventilsitz k geschlossen hat.

Die Ventilkonstruktion als solche besteht aus Einzelteilen, d.h. insbesondere der Ventilinnenraum besteht aus einzelnen Segmenten. Innerhalb eines Ventilgehäuses A sind zwei Sitzhülsen B und C zueinander benachbart platziert die die beiden mittleren Ventilsitze j und k bilden. Weiterhin sind endseitig zwei Führungshülsen D und E vorgesehen.

Dargestellt ist hier ein Ventil zum Anschluss an eine Grundplatte. Anstelle der offenen Anschlüsse 1 bis 5 sind auch Anschlussgewinde für ein Rohrleitungsanschluss möglich.

Die Steuerkanäle 12 und 14 münden üblicherweise in Vorsteuerventile, die hier nicht weiter dargestellt sind.

Bei der Montage werden eine Sitzhülse B oder C und eine anliegende Führungshülse D bzw. E in das Ventilgehäuse A eingepresst. Das montierte Schaltelement mit den vier Kolbendichtungen a, b, e, f und der Flachdichtung z wird eingeführt, bis in den Kolbenraum der Führungshülse D bzw. E. Anschließend wird die zweite Ventilsitzhülse C bzw. B und die verbleibende Führungshülse E bzw. D eingepresst.

Bei einer baulichen Umstellung auf Vakuumbetrieb ist dies einfach durch konstruktive Umkehrung der Flächendifferenz möglich. D.h der Ventilsitzdurchmesser muss kleiner als der Durchmesser des Betätigungskolbens respektive der Kolbendichtungen f bzw. e sein.

Die sich bodenseitig am Ventil ergebenden Öffnungen sind in diesem Ausführungsbeispiel der zentrale Speisedruckanschluss 1, der erste Arbeitsleitungsanschluss 2, der erste Entlüftungsanschluss 3, der zweite Arbeitsleitungsanschluss 4 sowie der zweite Entlüftungsleitungsanschluss 5.

Insgesamt liegt eine einfache Konstruktion eines sehr schnellschaltenden leichtgängigen Ventils vor. Die Montage ist ebenfalls einfach und durch Austausch bestimmter Ventilsegmente auch funktionell mit der gewünschten Ventilfunktion auszustatten.

### Bezugszeichenliste

- 1: Speisedruckanschluss
- 2: erster Arbeitsleitungsanschluss
- 3: erster Entlüftungsleitungsanschluss
- 4: zweiter Arbeitsleitungsanschluss
- 5: zweiter Entlüftungsleitungsanschluss

- 12: Steuerkanal
- 14: Steuerkanal

- A: Ventilgehäuse
- B: Sitzhülsen
- C: Sitzhülsen
- D: Führungshülse
- E: Führungshülse

- a: Kolbendichtung
- b: Kolbendichtung
- c: Kolben
- d: Kolben
- e: Kolbendichtung
- f: Kolbendichtung
- g: Raum für Druckfeder
- h: Steuerkante
- i: Steuerkante
- j: Ventilsitz
- k: Ventilsitz

- x: Einführungssteuerkante
- z: Flachdichtung

## Patentansprüche

1. Schnellschaltendes pneumatisches Ventil mit je einem endseitig eines in einem Ventilgehäuse (A) integrierten schieberartigen Schaltelements angeordneten Betätigungskolben (c, d), wovon mindestens einer der Betätigungskolben (c; d) mit einem Steuerdruck über einen zugeordneten Steuerkanal (12 bzw. 14) beaufschlagbar ist, um das Schaltelement zwischen zwei durch Endanschlag definierten Schaltpositionen zu bewegen, wobei das schieberartige Schaltelement zwischen den beiden Betätigungskolben (c und d), die gleichzeitig auch mit Steuerkanten (x) zur Bildung von Schieberventilen zusammenwirken, Mittel zur Betätigung mindestens eines zentralen Ventilsitzes (j, k) aufweist,
**dadurch gekennzeichnet, dass** die Mittel zur Betätigung des mindestens einen zentralen Ventilsitzes (j, k) in Form einer außenradial auf dem Schaltelement angebrachten Flachdichtung (z) ausgeführt sind und ferner die beiden Betätigungskolben (c und d) mit jeweils zwei axial voneinander beabstandeten Dichtringen (b, e) bzw. (a, f) versehen sind, um einerseits eine Abdichtung für den Steuerdruck und andererseits eine Abdichtung gegenüber den Steuerkanten (x) des je zugeordneten Schieberventils zu bilden.

2. Pneumatisches Ventil nach Anspruch 1,
**dadurch gekennzeichnet,**
**dass** das Schaltelement entlang des Hubes genau zwei einander gegenüberliegend im Ventilgehäuse (A) angeordnete Ventilsitze (j, k) wechselseitig betätigt.

3. Pneumatisches Ventil nach einem der vorhergehenden Ansprüche,
**dadurch gekennzeichnet,**
**dass** die innerhalb des Ventilgehäuses (A) ausgebildeten Steuerkanten (x) und Ventilsitze (j, k) durch entsprechend konturierte einlegbare Hülsen (B, C, D, E) gebildet sind.

4. Pneumatisches Ventil nach einem der vorhergehenden Ansprüche,
**dadurch gekennzeichnet,**
**dass** im jeweiligen Bereich der hubbezogenen Betätigungsstrecke der beiden Betätigungskolben (c; d) jeweils ein Entlüftungsleitungsanschluss (5; 3) für zugeordnete Arbeitsleitungen (4, 2) vorgesehen ist.

5. Pneumatisches Ventil nach einem der vorhergehenden Ansprüche,
**dadurch gekennzeichnet,**
**dass** im jeweiligen Bereich der hubbezogenen Betätigungsstrecke der Flachdichtung (z) ein zentraler Speisedruckanschluss (1) für zugeordnete Arbeitsleitungen (4, 2) vorgesehen ist.

6. Pneumatisches Ventil nach einem der vorhergehenden Ansprüche,
**dadurch gekennzeichnet,**
**dass** die Betätigungskolben (c, d) in jeweils einer zugeordneten Führungshülse (D, E) angeordnet sind, in der ebenfalls der je zugeordnete Steuerkanal (12; 14) integriert ist

7. Pneumatisches Ventil nach einem der vorhergehenden Ansprüche,
**dadurch gekennzeichnet,**
**dass** zwischen den endseitigen Führungshülsen (D, E) zwei zueinander benachbarte Sitzhülsen (B, C) im Ventilgehäuse (A) angeordnet sind, die zum einen jeweils einen der Ventilsitze (j bzw. k) bilden, und die zum anderen je einen der Arbeitsleitungsanschlüsse (2 bzw. 4) enthalten.

8. Pneumatisches Ventil nach einem der vorhergehenden Ansprüche,
**dadurch gekennzeichnet,**
**dass** das Schaltelement entweder beidseitig mit einem Steuerdruck beaufschlagbar ist, um ein bistabiles 5/2-Wegeventil zu bilden, oder
**dass** das Schaltelement einseitig mit einem Steuerdruck und auf der gegenüberliegenden Seite durch eine in einem Raum (g) angeordnete Druckfeder beaufschlagbar ist, um ein monostabiles 5/2-wegeventil zu bilden.

## Claims

1. A fast-switching pneumatic valve having an actuating piston (c, d) arranged at each end of a slide-like switching element integrated in a valve housing (A), wherein a control pressure is applicable to at least one of the actuating pistons (c; d) via an associated control channel (12 and 14, respectively) to move the switching element between two switching positions defined by end stops, wherein the slide-like switching element has means for actuating at least one central valve seat (j, k) between the two actuating pistons (c and d) which simultaneously cooperate with control edges (x) to form slide valves,
**characterised in that** the means for actuating the at least one central valve seat (j, k) is in the form of a flat seal (z) attached on the switching element in an outer radial position, and further each of the two actuating pistons (c and d) is provided with two axially spaced sealing rings (b, e) and (a, f), respectively, to form on the one hand a seal for the control pressure and on the other hand a seal with respect to the control edges (x) of each of the associated slide valves.

2. The pneumatic valve according to claim 1,
**characterised in that**
the switching element actuates in an alternating manner exactly two valve seats (j, k) arranged in opposition within the valve housing (A).

3. The pneumatic valve according to any one of the preceding claims,
**characterised in that**
the control edges (x) and valve seats (j, k) formed within the valve housing (A) are formed by correspondingly contoured insertable bushings (B, C, D, E).

4. The pneumatic valve according to any one of the preceding claims,
**characterised in that**
a venting line port (5; 3) for associated working lines (4, 2) is provided in each area of the stroke-related actuating distance of each of the two actuating pistons (c; d).

5. The pneumatic valve according to any one of the preceding claims,
**characterised in that**
a central feeding pressure port (1) for associated working lines (4, 2) is provided in each area of the stroke-related actuating distance of the flat seal (z).

6. The pneumatic valve according to any one of the preceding claims,
**characterised in that**
the actuating pistons (c, d) are each arranged in an associated guiding bushing (D, E), in which each associated control channel (12; 14) is also integrated.

7. The pneumatic valve according to any one of the preceding claims,
**characterised in that**
two adjacent seat bushings (B, C), which, on the one hand, each form one of the valve seats (j and k, respectively) and, on the other hand, each include one of the working ports (2 and 4, respectively), are arranged in the valve housing (A) between the guiding bushings (D, E) disposed at each end.

8. The pneumatic valve according to any one of the preceding claims,
**characterised in that**,
either a control pressure is applicable to either side of the switching element to form a bistable 5-port/2-position directional valve, or a control pressure is applicable to one side of the switching element and a pressure is applicable to the opposite side of it by a pressure spring arranged in a space (g) to form a monostable 5-port/2-position directional valve.

## Revendications

1. Soupape pneumatique à commutation rapide, comportant un piston d'actionnement (c, d) respectif agencé côté extrémité d'un élément à commutation en forme de tiroir intégré dans un boîtier de soupape (A), dont au moins un des pistons d'actionnement (c ; d) peut être alimenté par une pression de commande via un canal de commande (12, 14) associé pour déplacer l'élément de commutation entre deux positions de commutation définies par une butée d'extrémité, l'élément de commutation en forme de tiroir présentant, entre les deux pistons d'actionnement (c et d) qui coopèrent en même temps aussi avec des arêtes de commande (x) pour former des soupapes à tiroir, des moyens d'actionnement pour actionner au moins un siège de soupape central (j, k),
**caractérisée en ce que** les moyens d'actionnement dudit au moins un siège de soupape central (j, k) sont réalisés sous forme d'un joint plat (z) monté radialement à l'extérieur sur l'élément de commutation et **en ce qu'**en outre, les deux pistons d'actionnement (c et d) sont pourvus chacun de deux anneaux d'étanchéité (b, e) et (a, f) espacés axialement l'un de l'autre, respectivement, pour former d'une part un étanchement pour la pression de commande et d'autre part un étanchement vis-à-vis des arêtes de commande (x) de la soupape à tiroir respective associée.

2. Soupape pneumatique selon la revendication 1,
**caractérisée en ce que**
l'élément de commutation actionne alternativement le long de la course exactement deux sièges de soupape (j, k) agencés à l'opposé l'un de l'autre dans le boîtier de soupape (A).

3. Soupape pneumatique selon l'une quelconque des revendications précédentes,
**caractérisée en ce que**
les arêtes de commande (x) réalisées à l'intérieur du boîtier de soupape (A) et les sièges de soupape (j, k) sont formées par des douilles (B, C, D, E) insérables à contour correspondant.

4. Soupape pneumatique selon l'une quelconque des revendications précédentes,
**caractérisée en ce que**
dans la zone respective de la course d'actionnement des deux pistons d'actionnement (c ; d) se référant à la course est prévu un raccord de conduite d'aération (5 ; 3) respectif pour des conduites de travail (4, 2) associées.

5. Soupape pneumatique selon l'une quelconque des revendications précédentes,
**caractérisée en ce que**
dans la zone respective de la course d'actionnement du joint plat (z) se référant à la course est prévu un raccord de pression d'alimentation (1) pour des conduites de travail (4, 2) associées.

6. Soupape pneumatique selon l'une quelconque des revendications précédentes,
**caractérisée en ce que**
les pistons d'actionnement (c, d) sont agencés dans une douille de guidage (D, E) respective associée dans laquelle est également intégré le canal de commande (12 ; 14) respectif associé.

7. Soupape pneumatique selon l'une quelconque des revendications précédentes,
**caractérisée en ce que**
entre les douilles de guidage (D, E) côté extrémité, deux douilles de siège (B, C) mutuellement voisines sont agencées dans le boîtier de soupape (A), lesquelles forment d'une part un des sièges de soupape (j et k) respectif, et d'autre part un des raccords de conduite de travail (2 et 4) respectif.

8. Soupape pneumatique selon l'une quelconque des revendications précédentes,
**caractérisée en ce que**
l'élément de commutation peut être alimenté soit des deux côtés par une pression de commande pour former une soupape à 5 voies/2 positions bistable ou **en ce que** l'élément de commutation peut être alimenté d'un côté par une pression de commande et sur l'autre côté par un ressort de compression agencé dans une chambre (g) pour former une soupape à 5 voies/2 positions monostable.
